# EUROPÄISCHE PATENTSCHRIFT

(11) **EP 1 307 126 B1**
(45) Veröffentlichungstag und Bekanntmachung des Hinweises auf die Patenterteilung: **18.06.2008**
(21) Anmeldenummer: 01956207.3
(22) Anmeldetag: 08.08.2001
(51) Int. Cl.: A47J 36/06

(54) **HEISSLUFTDECKEL**
HOT-AIR LID
COUVERCLE A AIR CHAUD

(30) Priorität: 09.08.2000 AT 13742000
(43) Veröffentlichungstag der Anmeldung: 07.05.2003
(73) Patentinhaber: Holl, Josef, 4863 Seewalchen (AT)
(72) Erfinder: Holl, Josef, 4863 Seewalchen (AT)
(74) Vertreter: Hübscher, Helmut
(86) Internationale Anmeldenummer: PCT/AT2001/000263
(87) Internationale Veröffentlichungsnummer: WO 2002/011591

(56) Entgegenhaltungen:
- US-A- 2 573 719
- US-A- 2 742 850

## Beschreibung

### Technisches Gebiet

Die Erfindung bezieht sich auf einen Heißluftdeckel für Koch- und Bratbehälter.

### Stand der Technik

Bekannte Heißluftbratdeckel nehmen beispielsweise Filter zur Geruchsabsorption auf (DE 44 12 843) und sollen ein besonders wirkungsvolles Braten bzw. Garen des Brat- oder Gargutes gewährleisten (EP 0 712 596 A). Weiters ist es bekannt (EP 0 788 754 A1, EP 0 780 078 A1 und US 5 584 235 A), ein Gargut in einem mit Wasserdampf beaufschlagbaren Kochgerät zu dämpfen. Ein besonders schonendes Garen eines Gargutes ist mit den vorgenannten Vorrichtungen jedoch nicht möglich, da diese Vorrichtungen keinen das Gargut umströmenden Heißluftstrom erzeugen.

Ein anderer gattungsgemäßer Heißluftdeckel ist bekannt aus US 2 573 719.

### Darstellung der Erfindung

Davon ausgehend, ist es die Aufgabe der Erfindung, die oben genannten Nachteile zu vermeiden und einen Heißluftbratdeckel der eingangs geschilderten Art derart auszubilden, daß dieser auf einfache Weise ein besonders schonendes Garen eines Gargutes in einem Heißluftstrom gestattet.

Die Erfindung löst diese Aufgabe dadurch, daß der Heißluftdeckel aus einem Oberteil und einem in ihm befestigbaren Unterteil besteht, der mit dem Oberteil einen Garraum einschließt, wobei der Unterteil eine nach oben gerichtete Wölbung mit Dampfaustrittsöffnungen aufweist und um diese Wölbung ein Reflektor vorgesehen ist, in dem sich weitere Öffnungen befinden.

Durch ein Erhitzen einer Pfanne wird die in der Pfanne eingeschlossene Luft erwärmt, welche Luft durch die Dampfaustrittsöffnungen in der Wölbung in den Garraum eintritt und anschließend beim Rückströmen aus dem Garraum in die Pfanne durch den Reflektor das auf dem Reflektor liegende Gargut umströmt und dieses besonders schonend gart. Die Strömungsführung und Strömungswirkung wird dabei durch den in Folge der nach oben gerichteten Wölbung entstehenden Kamineffekt besonders wirkungsvoll unterstützt. Um zu verhindern, daß am Oberteil des Deckels kondensierendes Wasser in den unteren Bereich der Pfanne gelangt bzw. um das Kondenswasser vom Gargut fernzuhalten, weist der Reflektor eine den Bereich der Durchtrittsöffnungen umschließende Sicke oder Rille auf, die den Rücklauf von sich bildendem Kondenswasser in die Pfanne verhindert. Steht die mit radialem Abstand vom Außenrand des Unterteiles verlaufende Umfangssicke nach oben hin vor, so entsteht auf einfache Wiese ein ausreichend großer Aufnahmebereich zwischen Sicke und Unterteilrand für anfallendes Kondenswasser und wird eine höhere Stabilität und somit Verwindungssteifigkeit des Unterteiles erzielt. Anstatt der nach oben hin vorstehenden Umfangssicke kann aber auch eine nach unten hin vorstehende Umfangsrille oder Sicke vorgesehen sein, wobei dann die Sicke oder Rille das Kondenswasser aufnimmt.

Die Strömungswirkung der Heißluft um das Gargut wird dann wesentlich verbessert, wenn der Unterteil einen aufgebogenen Rand mit Durchtrittsöffnungen aufweist, durch welche der Heißluftstrom wieder in den unteren Bereich der Pfanne gelangen kann, wo die Luft bzw. der Dampf von neuem erwärmt und dem Garraum zugeführt wird.

Besonders einfache Konstruktionsverhältnisse ergeben sich, wenn der Unterteil wenigstens zwei im Randbereich schwenkbar gelagerte, nach unten vorstehende Haltebügel aufweist, die in eine Hinterschneidung des Randes des Oberteiles eingreifen. So braucht der Unterteil zum Garen lediglich samt dem Gargut in den Oberteil eingesetzt und in diesem befestigt zu werden, wonach der erfindungsgemäße Heißluftbratdeckel beispielsweise auf eine Pfanne aufgesetzt und diese Pfanne mittels eines herkömmlichen Herdes erwärmt wird. Nach dem Garvorgang werden die Haltebügel gelöst, worauf der Unterteil samt Gargut vom Oberteil abgenommen werden kann. Zudem ist durch die vorgenannten Maßnahmen sichergestellt, daß der Unterteil dicht am Oberteil anliegt.

Weist der Oberteil eine Durchgangsöffnung auf, die mit Hilfe eines anschlagbegrenzt drehverstellbar auf dem Oberteil gelagerten Griffstückes wahlweise freigegeben ist, so kann der Dampfdruck im Koch- bzw. Bratbehälter auf besonders einfache Weise reguliert und ein Abheben des Heißluftdeckels von beispielsweise der Pfanne sicher vermieden werden. Somit ist sichergestellt, daß der Heißluftdeckel stets sicher auf dem Koch- bzw. Bratbehälter aufliegt.

Nimmt das Griffstück ein Thermometer zur Anzeige der Garraumtemperatur auf, so kann die Garraumtemperatur in besonders vorteilhafter Weise überprüft werden. Ein Regulieren der Garraumtemperatur erfolgt durch ein Verstellen der Energiezufuhr, also beispielsweise durch ein Verstellen der Heizstufe einer Heizplatte.

Konstruktiv besonders einfache Verhältnisse ergeben sich, wenn das Griffstück eine Durchtrittsöffnung für einen in eine Rastaufnahme des Oberteiles schnappverschlußartig einrastenden Rastansatz des in eine Aufnahmeausnehmung des Griffstückes einsetzbaren Thermometers aufweist. Durch diese Maßnahme ist das Griffstück einerseits in einfacher Weise zwischen Oberteil und Thermometer geklemmt und kann anderseits jederzeit vom Oberteil abgenommen werden, da das Thermometer über den Rastansatz lösbar mit dem Oberteil verbunden ist. Dabei hat es sich als vorteilhaft erwiesen, wenn der Rastansatz als Temperaturfühler für das Thermometer ausgebildet ist, da in diesem Fall keine weiteren Übertragungsglieder zwischen dem Thermometer und dem Rastansatz bzw. dem Oberteil vorgesehen werden müssen.

### Kurze Beschreibung der Zeichnungen

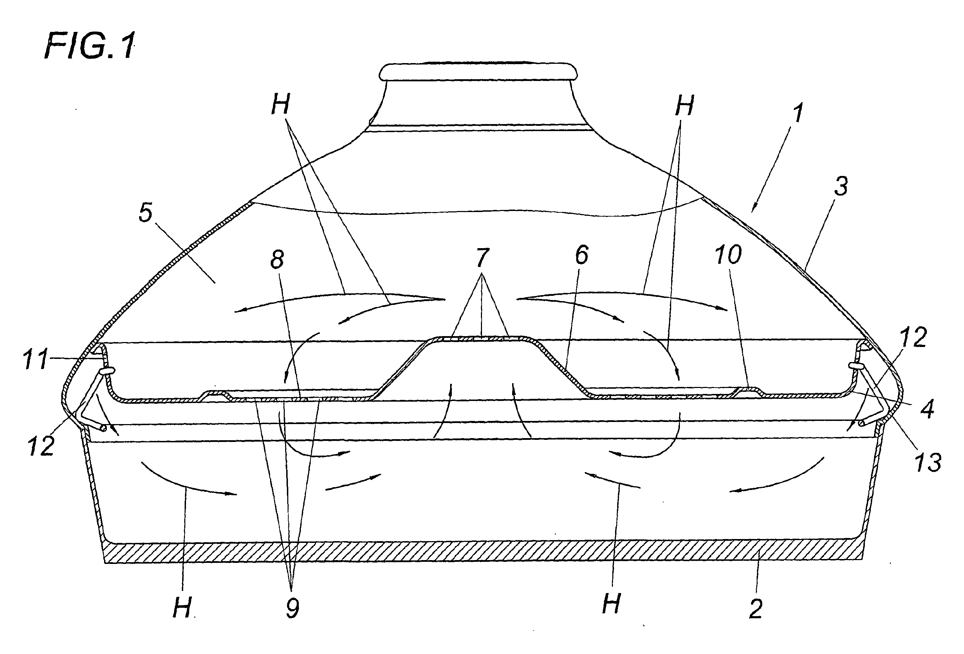

Anhand der Zeichnung ist der Erfindungsgegenstand rein schematisch beispielsweise dargestellt. Es zeigen
- Fig. 1.: einen erfindungsgemäßen auf einem Bratbehälter aufgesetzten Heißluftdeckel in teilgeschnittener Seitenansicht,
- Fig. 2: ein Griffstück eines erfindungsgemäßen Heißluftdeckels in teilgeschnittener Seitenansicht und in vergrößertem Maßstab und
- Fig. 3: eine Unteransicht auf das Griffstück aus Fig. 2.

### Bester Weg zur Ausführung der Erfindung

Ein Heißluftbratdeckel 1 für eine Pfanne 2 besteht aus einem Oberteil 3 und einem in diesen Oberteil 3 befestigbaren Unterteil 4. Oberteil 3 und Unterteil 4 schließen gemeinsam einen Garraum 5 ein, wobei der Unterteil 4 eine nach oben gerichtete Wölbung 6 mit Dampfaustrittsöffnungen 7 aufweist. Die Wölbung 6 ist von einem Reflektor 8 umgeben, in dem sich weitere Durchtrittsöffnungen 9 befinden. Im Unterteil 4 ist eine nach oben hin vorstehende Sicke 10 mit radialem Abstand vom Außenrand eingearbeitet, die den Rücklauf von sich am Oberteil 3 bildendem Kondenswasser in der Pfanne 2 verhindert. Am aufgebogenen Rand des Unterteiles 4 befinden sich ebenfalls Durchtrittsöffnungen 11, durch welche der Heißluftstrom H aus dem Garraum 5 in den Koch- bzw. Bratbehälter 2 gelangen kann. Zum Befestigen des Unterteils 4 im Oberteil 3 sind am Unterteil 4 zwei im Randbereich gelagerte und nach unten vorstehende Haltebügel 12 vorgesehen, die in eine Hinterschneidung 13 des Randes des Oberteiles 3 eingreifen.

Zum Garen eines Gargutes, wie beispielsweise Gemüse, Fleisch u. dgl., wird dieses lediglich auf den Unterteil 4 bzw. Reflektor 8 gelegt, der Unterteil 4 in den Oberteil 3 eingesetzt und mit den Haltebügeln 12 am Oberteil 3 befestigt. Danach wird der Heißluftbratdeckel 1 auf die Pfanne 2 aufgesetzt und der Pfanne 2 beispielsweise mittels eines herkömmlichen Herdes Wärme zugeführt. Das Erwärmen der Pfanne 2 bringt ein Erwärmen der Luft in derselben mit sich. Die erwärmte Luft steigt in Folge des Kamineffektes durch die Dampfaustrittsöffnungen 7 der nach oben gerichteten Wölbung 6 in den Garraum 5 auf, umströmt dort das Gargut und strömt anschließend durch die Durchtrittsöffnungen 11 und den Reflektor 8 wieder in den Koch- bzw. Bratbehälter 2 zurück, wonach die Luft wieder erwärmt wird und sich der Kreislauf schließt. Am Oberteil 3 kondensierender Wasserdampf wird dabei zwischen dem Randbereich des Unterteiles 4 und der Sicke 10 aufgefangen und am Rücklaufen in den Koch- bzw. Bratbehälter 2 gehindert.

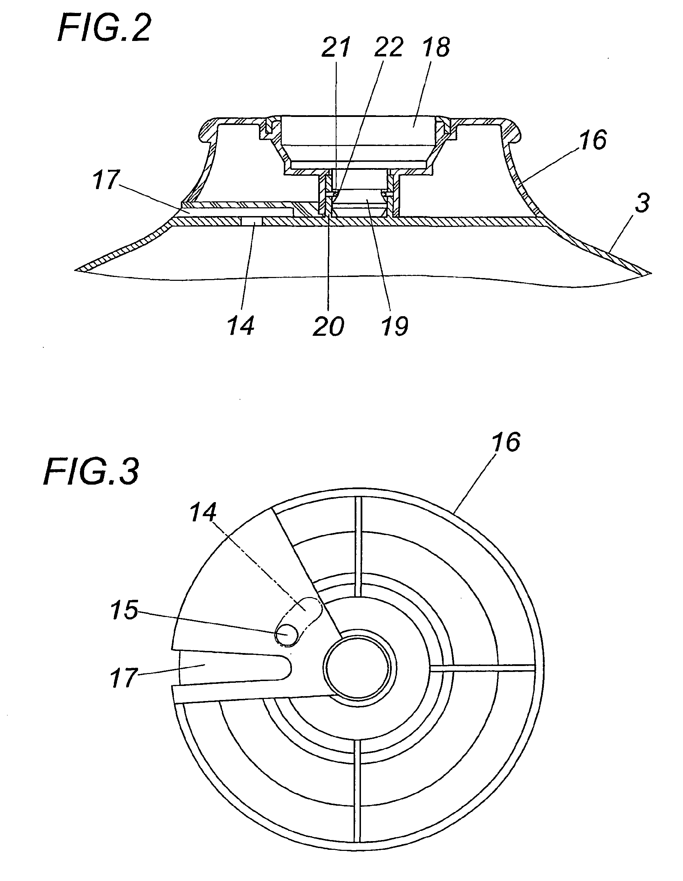

Zudem weist der Oberteil 3 eine Durchgangsöffnung 14 auf (in Fig. 3 nur angedeutet), die mit Hilfe eines mittels eines Zapfens 15 anschlagbegrenzt drehverstellbar auf dem Oberteil 3 gelagerten Griffstückes 16 wahlweise frei gegeben ist. Um nun Dampf aus dem Garraum 5 durch diese Durchgangsöffnung 14 und aus dem Heißluftdeckel 1 wahlweise ableiten zu können, ist im Griffstück 16 ein Kanal 17 zur Dampf- bzw. Heißluftableitung ausgeformt. In Fig. 2 ist die Durchgangsöffnung 14 freigegeben und kann der Dampf bzw. die Heißluft über den Kanal 17 aus dem Behälterinnenraum abgeführt werden. In Fig. 3 ist das Griffstück 16 in eine Stellung verschwenkt, in der die Durchgangsöffnung 14 vom Griffstück 16 verschlossen ist. Das Griffstück 16 besitzt an seiner Oberseite eine Ausnehmung zur Aufnahme eines Thermometers 18 zur Anzeige der Garraumtemperatur und weist zudem eine Durchtrittsöffnung für einen am Thermometer 18 angeformten Rastansatz 19 auf, der in eine am Oberteil 3 angeformte Rastaufnahme 20 schnappverschlußartig einrastbar ist. Um einen sicheren Halt des Thermometers 18 am Oberteil 3 zu gewährleisten, ist in der Rastaufnahme 20 eine Feder 21 angeordnet, die in eine Hinterschneidung 22 des Rastansatzes 19 eingreift. Dabei wird das Griffstück 16 zwischen Oberteil 3 und Thermometer 18 geklemmt. Zum Reinigen des Heißluftdeckels 1 kann das Thermometer 18 samt Griffstück 16 nach einem Überwinden der Federkraft einfach vom Oberteil 3 abgenommen werden. Der Rastansatz 19 ist zugleich als Temperaturfühler für das Thermometer 18 ausgebildet.

## Patentansprüche

1. Heißluftdeckel (1) für Koch- und Bratbehälter (2), **dadurch gekennzeichnet, daß** er aus einem Oberteil (3) und einem in ihm befestigbaren Unterteil (4) besteht, der mit dem Oberteil (3) einen Garraum (5) einschließt, wobei der Unterteil (4) eine nach oben gerichtete Wölbung (6) mit Dampfaustrittsöffnungen (7) aufweist und um diese Wölbung (6) ein Reflektor (8) vorgesehen ist, in dem sich weitere Durchtrittsöffnungen (9) befinden.

2. Heißluftdeckel (1) nach Anspruch 1, **dadurch gekennzeichnet, daß** der Reflektor (8) eine den Bereich der Durchtrittsöffnungen (9) umschließende Sicke oder Rille (10) aufweist.

3. Heißluftdeckel (1) nach Anspruch 2, **dadurch gekennzeichnet, daß** die mit radialem Abstand vom Außenrand des Unterteiles (4) verlaufende Umfangssicke nach oben hin vorsteht.

4. Heißluftdeckel (1) nach einem der Ansprüche 1 bis 3, **dadurch gekennzeichnet, daß** der Unterteil (4) einen aufgebogenen Rand mit Durchtrittsöffnungen (11) aufweist.

5. Heißluftdeckel (1) nach einem der Ansprüche 1 bis **4, dadurch gekennzeichnet, daß** der Unterteil (4) wenigstens zwei im Randbereich schwenkbar gelagerte, nach unten vorstehende Haltebügel (12) aufweist, die in eine Hinterschneidung (13) des Randes des Oberteiles (3) eingreifen.

6. Heißluftdeckel (1) nach einem der Ansprüche 1 bis 5, **dadurch gekennzeichnet, daß** der Oberteil (3) eine Durchgangsöffnung (14) aufweist, die mit Hilfe eines anschlagbegrenzt drehverstellbar auf dem Oberteil (3) gelagerten Griffstückes (16) wahlweise freigegeben ist.

7. Heißluftdeckel (1) nach Anspruch 6, **dadurch gekennzeichnet, daß** das Griffstück (16) ein Thermometer (18) zur Anzeige der Garraumtemperatur aufnimmt.

8. Heißluftdeckel (1) nach Anspruch 7, **dadurch gekennzeichnet, daß** das Griffstück (16) eine Durchtrittsöffnung für einen in eine Rastaufnahme (20) des Oberteiles (3) schnappverschlußartig einrastenden Rastansatz (19) des in eine Aufnahmeausnehmung des Griffstückes (16) einsetzbaren Thermometers (18) aufweist.

9. Heißluftdeckel (1) nach Anspruch 8, **dadurch gekennzeichnet, daß** der Rastansatz (19) als Temperaturfühler für das Thermometer (18) ausgebildet ist.

## Claims

1. Hot-air lid (1) for containers (2) used for cooking and frying, **characterised in that** it consists of an upper part (3) and a lower part (4) which can be fixed therein and which, together with the upper part (3), encloses a cooking chamber (5), wherein the lower part (4) has an upwardly oriented concavity (6) with steam outlet openings (7), and a reflector (8) in which further through openings (9) are located is provided around this concavity (6).

2. Hot-air lid (1) as claimed in claim 1, **characterised in that** the reflector (8) has a bead or flute (10) surrounding the region of the through openings (9).

3. Hot-air lid (1) as claimed in claim 2, **characterised in that** the peripheral bead extending radially spaced apart from the outer edge of the lower part (4) protrudes upwards.

4. Hot-air lid (1) as claimed in any one of claims 1 to 3, **characterised in that** the lower part (4) has an upwardly-bent edge with through openings (11).

5. Hot-air lid (1) as claimed in any one of claims 1 to 4, **characterised in that** the lower part (4) has at least two downwardly-protruding holding brackets (12) which are pivotably mounted in the edge region and which engage in an undercut (13) in the edge of the upper part (3).

6. Hot-air lid (1) as claimed in any one of claims 1 to 5, **characterised in that** the upper part (3) has a through opening (14) which is released as desired with the aid of a handle piece (16) which is mounted on the upper part (3) so as to be rotatably displaceable in a manner limited by a stop.

7. Hot-air lid (1) as claimed in claim 6, **characterised in that** the handle piece (16) receives a thermometer (18) to indicate the cooking chamber temperature.

8. Hot-air lid (1) as claimed in claim 7, **characterised in that** the handle piece (16) has a through opening for a latching shoulder (19) on the thermometer (18) which can be inserted into a receiving orifice in the handle piece (16), which latching shoulder latches into a latching receiver (20) in the upper part (3) in a snap-locking manner.

9. Hot-air lid (1) as claimed in claim 8, **characterised in that** latching shoulder (19) is formed as a temperature sensor for the thermometer (18).

## Revendications

1. Couvercle à air chaud (1) pour récipients de cuisson et de rôtissage (2), **caractérisé en ce qu'**il est composé d'une partie supérieure (3) et d'une partie inférieure (4) susceptible de lui être fixée, enfermant, avec la partie supérieure (3), une enceinte de cuisson (5), la partie inférieure (4) présentant un bombement (6) tourné vers le haut, avec des ouvertures de sortie de vapeur (7) et, autour de ce bombement (6), étant prévu un réflecteur (8), dans lequel se trouvent d'autres ouvertures de passage (9).

2. Couvercle à air chaud (1) selon la revendication 1, **caractérisé en que** le réflecteur (8) présente une moulure ou cannelure (10), entourant la zone des ouvertures de passage (9).

3. Couvercle à air chaud (1) selon la revendication 2, **caractérisé en que** la moulure périphérique, s'étendant à distance radiale du bord extérieur de la partie inférieure (4), fait saillie vers le haut.

4. Couvercle à air chaud (1) selon l'une des revendications 1 à 3, **caractérisé en que** la partie inférieure (4) présente un bord plié vers le haut, avec des ouvertures de passage (11).

5. Couvercle à air chaud (1) selon l'une des revendications 1 à 4, **caractérisé en que** la partie inférieure (4) présente au moins deux étriers de maintien (12) faisant saillie vers le bas, montés à pivotement dans la zone de bordure et s'engageant dans une contre-dépouille (13) du bord de la partie supérieure (3).

6. Couvercle à air chaud (1) selon l'une des revendications 1 à 5, **caractérisé en que** la partie supérieure (3) présente une ouverture de passage (14), dégagée au choix à l'aide d'une pièce de saisie (16), montée sur la partie supérieure (3) avec une possibilité de manoeuvre en rotation, limitée par des butées.

7. Couvercle à air chaud (1) selon la revendication 6, **caractérisé en ce que** la pièce de saisie (16) reçoit un thermomètre (18) pour afficher la température de l'enceinte de cuisson.

8. Couvercle à air chaud (1) selon la revendication 7, **caractérisé en que** la pièce de saisie (16) présente une ouverture de passage pour un appendice d'encliquetage (19), s'encliquetant à la façon d'une fermeture à déclic dans un logement d'encliquetage (20) de la partie supérieure (3), l'appendice d'encliquetage du thermomètre (18) étant susceptible d'être inséré dans un évidement de logement de la pièce de saisie (16).

9. Couvercle à air chaud (1) selon la revendication 8, **caractérisé en que** l'appendice d'encliquetage (19) est réalisé sous la forme de sonde de température pour le thermomètre (18).
